# FASCICULE DE BREVET EUROPEEN

(11) **EP 1 014 702 B1**
(45) Date de publication et mention de la délivrance du brevet: **10.03.2010**
(21) Numéro de dépôt: 99403164.9
(22) Date de dépôt: 16.12.1999
(51) Int. Cl.: H04N 5/00

(54) **Terminal multimédia à serveur incorporé**
Multimedia-Endgerät mit eingebautem Server
Multimedia terminal with an incorporated server

(30) Priorité: 18.12.1998 FR 9816029
(43) Date de publication de la demande: 28.06.2000
(73) Titulaire: SAGEM COMMUNICATIONS SAS, 92848 Rueil Malmaison Cedex (FR)
(72) Inventeur: Surcouf, André, 95320 ST LEU LA FORET (FR)
(74) Mandataire: Loisel, Bertrand

(56) Documents cités:
- EP-A- 0 837 599
- EP-A- 0 844 788
- EP-A- 0 869 447
- US-A- 5 557 724
- HARTWIG S: "SOFTWAREARCHITEKTUREN FUER INTERAKTIVE DIGITALE DECODER" FERNSEH UND KINOTECHNIK, vol. 50, no. 3, 1 mars 1996 (1996-03-01), pages 92-94, 96 - 98,, XP000581418 ISSN: 0015-0142
- RATH K ET AL: "SET-TOP BOX CONTROL SOFTWARE: A KEY COMPONENT IN DIGITAL VIDEO" PHILIPS JOURNAL OF RESEARCH, vol. 1, no. 50, 1 janvier 1996 (1996-01-01), pages 185-199, XP002063594 ISSN: 0165-5817
- CHAMBERS C S: "DESIGNING A SET-TOP BOX OPERATING SYSTEM" INTERNATIONAL CONFERENCE ON CONSUMER ELECTRONICS - DIGEST OF TECHNI PAPERS, ROSEMONT, JUNE 7 - 9 1995, no. CONF. 14, 7 juin 1995 (1995-06-07), page 368/369 XP000547858 INSTITUTE OF ELECTRICAL AND ELECTRONICS ENGINEERS ISBN: 0-7803-2141-3

## Description

La présente invention concerne les terminaux multimédia destinés notamment à la réception de programmes de télévision diffusés sous forme numérique. Le terme « terminal » doit être interprété dans un sens large et comme désignant aussi bien un décodeur destiné à être raccordé à un récepteur traditionnel, par exemple suivant la norme PAL, qu'un récepteur de télévision complet incorporant les moyens de décodage des signaux numériques. Le terminal peut être prévu pour recevoir des émissions diffusées par voie hertzienne (par un réseau terrestre aussi bien que par l'intermédiaire d'un satellite) ou par un réseau câblé, constitué de câbles coaxiaux ou de fibres optiques, ou encore de réseaux téléphonique (XDSL) ou même RNIS (ISDN en anglais).

On connaît déjà des terminaux multimédia destinés à recevoir un signal d'entrée contenant un flot numérique représentatif d'images et de données fournissant des informations sur le contenu télévisuel, comme par exemple l'émission en cours, les programmes à venir, les indications sur la nature de l'émission, la mention qu'il s'agit d'un épisode d'une série, etc. Ce terminal comprend alors des moyens fournissant, à partir du flot entrant, un signal en bande de base et un convertisseur vidéo d'attaque d'écran ainsi qu'une mémoire de stockage d'informations numériques présentes dans le flot entrant.

On a déjà proposé des terminaux du type ci-dessus comprenant, en plus, un moteur d'affichage sur l'écran de messages en un langage utilisé pour la transmission d'informations multimédia sur les réseaux globaux d'ordinateurs, de type Internet ou Intranet. Par la suite et pour plus de facilité, la terminologie utilisée pour désigner les langages et les protocoles sera celle normalisée pour l'Internet, mais il doit être entendu que celle utilisation n'est nullement limitative.

Dans le cas d'un moteur d'affichage destiné à recevoir des messages Internet provenant d'un réseau local ou distant, le moteur sera destiné à l'affichage de messages en langage dit HTML (Hyper Text Mark-up Language) en utilisant le protocole dénommé HTTP (Hyper Text Transfer Protocol). L'accès à l'Internet peut s'effectuer avec l'utilisation d'un logiciel de navigation qui peut être extérieur au terminal, mais sera généralement incorporé à celui-ci. En général, les commandes s'effectuent à partir d'un boîtier séparé muni d'un clavier et utilisant une transmission infrarouge entre le terminal et le boîtier de commande manuelle. Il pourra s'agir d'une simple unité de télécommande, classique pour ce genre de terminal, ou bien d'un clavier alphanumérique.

La mise en oeuvre de terminaux de ce type a notamment été décrite par la demande de brevet EP 0 837 599, publiée le 22 avril 1998, pour des terminaux connectés à un réseau de télévision câblée.

La présente invention vise notamment à augmenter les fonctionnalités du terminal et notamment à lui permettre d'afficher sur l'écran des données mémorisées de diverses natures, prélevées dans le flot entrant, et à permettre par exemple via le réseau et à travers des protocoles internet standard (tels que HTTP, FTP ...) la consultation à distance de ces données ainsi que la commande à distance du terminal et de dispositifs externes (réglage TV, programmation d'enregistrement ...).

À cet effet, l'invention propose un terminal multimédia tel que défini dans la revendication 1. L'invention est avantageusement complétée par les caractéristiques des revendications 1-7.

Notamment l'invention propose un terminal incluant:
- un serveur interne apte à prélever des informations dans la mémoire et à les transformer pour les mettre sous forme de pages en un langage compatible avec celui du moteur d'affichage (c'est-à-dire en pages HTML dans le cas le plus fréquent) contenant des localisateurs de type unifié (qui seront généralement compatibles avec les localisateurs URL prévus par Internet) et à les fournir à un navigateur attaquant une deuxième entrée du convertisseur par l'intermédiaire du moteur d'affichage pour provoquer l'affichage d'au moins une page sur l'écran, et
- un dispositif de désignation ou pointage d'une zone particulière de l'écran, correspondant à un lien et provoquant l'envoi de ceux des localisateurs qui correspondent à un protocole de télévision à un serveur de ce protocole apte à effectuer les opérations désignées par le localisateur.

Parmi les opérations accessibles, on peut notamment citer le contrôle des fonctions de réception du téléviseur proprement dit alimenté par le terminal, par exemple la sélection de canal, l'affichage des sous-titres, la sélection de la langue, le niveau du son et la suppression du son.

Le serveur interne, avantageusement de type http, peut être connecté à des moyens d'accès à une liaison téléphonique externe, qui peut être vers le réseau commuté, un câble coaxial, un câble à fibres optiques ; le serveur est alors prévu pour assurer le décrochage lors d'un appel entrant et la réception. Un tel serveur, à accès conditionnel par code, utilisant par exemple une fonction dite d'appel-réponse ou « challenge-response » permet d'accéder depuis l'extérieur et à distance à toutes les fonctions locales.

Le serveur peut être muni de moyens d'accès à un réseau global d'ordinateurs, par exemple d'un des types connus à l'heure actuelle. Ces moyens d'accès peuvent comporter un modem téléphonique ou d'accès à un réseau câblé, hertzien ou ISDN.

Le serveur, utilisant avantageusement le protocole HTPP , FTP ou tout autre protocole standard internet, présent sous forme de logiciel, peut être prévu pour interpréter le localisateur URL de commande de dispositifs externes, tels qu'un magnétoscope connecté au terminal, ou même des dispositifs de domotique (mise en route et en veille d'alarme, mise et arrêt du chauffage, etc).

D'autres caractéristiques encore apparaîtront à la lecture de la description qui suit de modes particuliers de réalisation de l'invention, donnés à titre d'exemples non limitatifs.

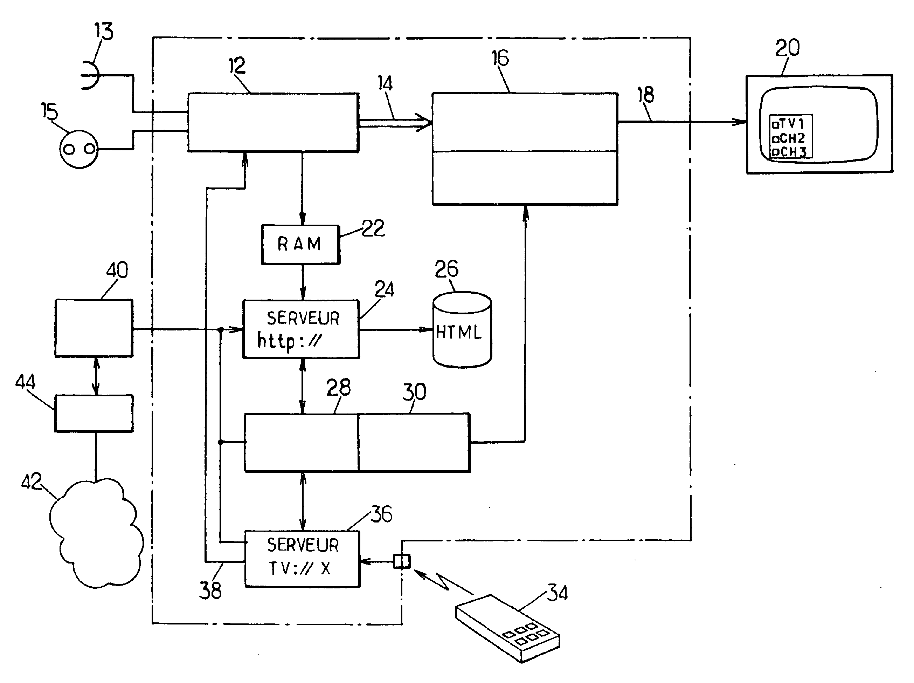

La description se réfère à la figure unique qui l'accompagne et qui est un synoptique d'un terminal suivant un mode particulier de réalisation. Sur ce synoptique, les fonctions classiques prévues sur un terminal ou un téléviseur ne sont pas représentées.

Le terminal 10 comporte un récepteur 12 qui, suivant le cas, est alimenté par une antenne 13, un câble ou une paire torsadée 15. Ce récepteur contient les éléments nécessaires pour sélectionner un canal et fournir un signal vidéo en bande de base sur une sortie 14. A l'heure actuelle, il existe de tels récepteurs destinés à traiter des signaux suivant la norme MPEG 2, qui comporte des informations vidéo et audio. Elles sont ensuite transmises par une sortie 14 en général au format 4:2:2 à un convertisseur assurant les fonctions de convertisseur pour la vidéo et les graphiques. Ce convertisseur 16 fournit sur sa sortie 18 un signal RVB, PAL, SECAM ou autre, exploitable par la partie basse fréquence d'un téléviseur 20.

Le récepteur 12 extrait, du flot entrant, les paquets représentatifs de données et les stocke dans une mémoire vive 22. Les paquets ainsi mémorisés sont accessibles par un serveur 24, généralement logiciel. Ce serveur 24 est apte à prélever dans la mémoire des requêtes d'accès à différents services. En général, ces requêtes ou commandes prendront la forme habituelle sur le réseau Internet :
http://<service>

Ce serveur interne 24 transforme les données en pages affichables, habituellement en HTML, qui sont stockées dans une mémoire vive (RAM ou mémoire magnétique) 26 d'où elles peuvent être extraites par le serveur 24 pour les envoyer à un navigateur 28. Le navigateur 28 est associé à un moteur 30 attaquant une seconde entrée du convertisseur 16 par l'intermédiaire d'un générateur d'OSD (affichage sur écran). Dans une autre forme de réalisation la sortie du moteur 30 pourra attaquer directement une entrée auxiliaire du récepteur 12 au niveau de son décodeur vidéo MPEG intégrant généralement un générateur OSD. Rappelons ici que l'architecture représentée ici est purement fonctionnelle et qu'en particulier les serveurs peuvent être réalisés par logiciel s'exécutant sur un processeur physique unique partagé avec la fonction récepteur.

Il est ainsi possible de provoquer l'affichage d'au moins une page sur l'écran du téléviseur 20. L'affichage ne sera pas celui des localisateurs complets, mais seulement celui d'une fraction déterminée des messages prélevés.

Pour permettre de désigner ou de pointer une zone particulière de l'écran, le terminal est muni de moyens de réception de messages de commande. Ces moyens de réception peuvent comporter un récepteur des signaux d'une télécommande 34 munie d'un clavier. Ce récepteur accède à un second serveur 36. Le protocole de transmission utilisé est avantageusement très parallèle à celui accessible par le serveur 24 et, pour cette raison, le serveur 36 sera dénommé par la suite « serveur TV ». Pour assurer la similitude, les requêtes d'accès suivant le protocole TV auront la syntaxe :
TV://<X>
où X désigne le service demandé.

Ce second serveur interne 36 permet de traiter des demandes de zapping, de supprimer le son ou de le modifier, de mettre en veille ou hors le terminal. Par exemple, les localisateurs URL peuvent être du genre suivant :
TV://<zap_channel_id>
où id désigne la chaîne sur laquelle le terminal doit se connecter.

Pour mettre ou supprimer le son, l'URL peut être :
TV://mute_<on | off>

Pour mettre le terminal en veille et hors veille, on pourra utiliser :
TV://terminal_<on | off>

Les services en question seront exécutés par transmission des signaux appropriés au récepteur, sur une liaison 38.

Les services peuvent être également des affichages sur le poste de télévision, par exemple une demande de la liste des services ou des chaînes disponibles, par exemple sous la forme :
TV://terminal/[get_svc_list | get_ch_list]?type=<
RADIO-TYPE
TELEVISION-TYPE>

Les services comprennent également la commande de l'emplacement et/ou de la taille des indications données sur l'écran du téléviseur 20. Pour cela, des messages de type TV sont adressés à l'aide de la télécommande 34. Ces messages permettront de faire apparaître un pointeur sur l'écran et de désigner l'emplacement où devront se trouver affichés des messages tels que la liste des services ou des chaînes disponibles, le nombre de services courants, etc. prélevés dans le flot entrant. Dans ce cas, les messages sont transmis au navigateur 28 sous forme de localisateur du type URL.

Le terminal peut être prévu pour recevoir et/ou envoyer des messages et des commandes à travers un réseau 42 de type Internet, Intranet, LAN, WAN ou IHDN (In Home Digital Network). Pour cela le navigateur 28 et les deux serveurs 24 et 36 sont reliés à un modem 40 permettant la connexion physique sur le support d'accès au réseau disponible au niveau de l'habitation. Ce modem pourra être de type câble, de type téléphonique conventionnel ou XDSL, de type RNIS, Ethernet ou encore IEEE 1394.

Une des premières fonctions consiste à permettre d'accéder au niveau du terminal à des informations disponibles sur des serveurs distants connectés sur le réseau, elle couvre en particulier l'accès au réseau Internet par le navigateur 28.

La fonction symétrique permettra l'accès à distance (soit courte distance dans le cas d'un réseau domestique comme l'IHDN ou longue distance dans le cas du réseau Internet) à des informations localisées dans la mémoire 26 du terminal au travers du serveur 24.

En ce qui concerne la transmission de commandes à distance, les cas suivants pourront être prévus.
- Commandes à distance (en général courte distance sur un réseau domestique ) du terminal par un client TV par l'envoi de requêtes tv : // au serveur 36 interne au terminal afin de réaliser des fonctions comme le zapping, la mise en veille, la programmation de réveil ...etc.
- Commandes locales passées à l'aide du boîtier de télécommande ou du clavier alphanumérique à action soit immédiate, soit différée (par exemple préprogrammation d'enregistrement mémorisée au niveau du terminal) de dispositifs externes audiovisuels (comme par exemple un magnétoscope) au plus généralement de nature domotique.
- Enfin commandes à distance, à travers le réseau 42 par un client navigateur standard, du terminal lui-même et/ou des dispositifs externes associés qui ne seraient pas connectés eux-mêmes sur le réseau 42 mais présenteraient une liaison (autre réseau isolé du réseau 42 ou liaison spécifique) avec le terminal. (par exemple magnétoscope commandé par l'« IR blaster » du terminal ).

## Revendications

1. Terminal multimédia de réception de télévision numérique destiné à recevoir des signaux d'entrée d'images et de données fournissant des informations sur le contenu télévisuel, comprenant :
- des moyens de réception (12) fournissant, à partir du flot entrant, un signal télévisuel en bande de base ;
- une mémoire (22) de stockage d'informations numériques présentes dans le flot entrant ;
- un convertisseur vidéo (16) d'attaque d'écran, qui fournit un signal exploitable par un téléviseur (20) ;
- un générateur d'affichage sur écran (OSD) ;
- un moteur d'affichage (30) de pages en un langage contenant des localisateurs ;
- un dispositif de réception de message de commande pour la désignation ou pointage d'une zone particulière de l'écran correspondant à un localisateur ;
- un navigateur (28) attaquant ce générateur d'affichage sur écran (OSD), par l'intermédiaire du moteur d'affichage (30), pour provoquer l'affichage d'au moins une page sur l'écran;
- un premier serveur interne (24), apte à prélever des informations dans la mémoire (22) et à les transformer pour les mettre sous forme de pagnes en un langage compatible avec celui du moteur d'affichage (30) et à les fournir au navigateur (28); et
- un deuxième serveur interne (36), suivant un protocole de télévision, apte à effectuer des opérations désignées par le localisateur.
- ce dispositif due réception de message de commande provoquant l'envoi de ceux des localisateurs qui correspondent à ce protocole de télévision à ce deuxième serveur interne (36).

2. Terminal selon la revendication 1, **caractérisé en ce que** les opérations accessibles comprennent le contrôle des fonctions de réception de télévision,

3. Terminal selon la revendication 2, **caractérisé en ce que** les dites fonction comprennent le choix du canal, l'affichage des sous-titres, la suppression du son.

4. Terminal selon la revendication 1, 2 ou 3, **caractérisé en ce que** le premier serveur (24) est connecté des moyens d'accès à une liaison câblée externe pour recevoir des messages depuis l'extérieur.

5. Terminal selon la revendication 4, **caractérisé en ce que** l'accès de l'extérieur s'effectue avec un code.

6. Terminal selon l'une quelconque des revendications précédentes, **caractérisé en ce que** le navigateur (28) est muni de moyens (40, 44) d'accès à un réseau global d'ordinateurs (42).

7. Terminal selon l'une quelconque des revendications précédentes, **caractérisé en ce que** le serveur (24, 36) est prévu pour interpréter des localisateurs URL de commande de dispositifs externes.

## Claims

1. Multimedia terminal for reception of digital television programs, intended to receive image and data input signals carrying information on a TV content, comprising:
- reception means (12) for delivering, from an incoming flow, a baseband TV signal ;
- a memory (22) for storing digital information present in the incoming flow ;
- a video converter (16) for driving a display, which delivers a signal usable by a TV receiver (20) ;
- an on screen display (OSD) generator ;
- a display engine (30) for displaying pages in a language containing locators ;
- a control message reception device for designating or pointing to a particular zone of the screen that corresponds to a locator ;
- a navigator (28) for driving said on screen display (OSD) generator, via the display engine (30), to cause at least one page to be displayed on the screen ;
- a first internal server (24), apt to read out information from the memory (22) and to transform them into pages in a language compatible with the language of the display engine (30) and to supply them to the navigator (28) ; and
- a second internal server (26), according to a television protocol, apt to perform operations designated by the locator,
- this control message reception device causing those locators which correspond to this television protocol to be sent to this second internal server (36).

2. Terminal according to claim 1, **characterized in that** the accessible operations include control of functions of a TV receiver.

3. Terminal according to claim 2, **characterized in that** said functions include channel selection, display of subtitles and sound muting.

4. Terminal according to claim 1, 2 or 3, **characterized in that** the first server (24) is connected to means giving access to an external wire link to receive messages from the outside.

5. Terminal according to claim 4, **characterized in that** access from the outside is with a code.

6. Terminal according to any one of the preceding claims, **characterized in that** the navigator (28) is provided with means (40, 44) for access to a global computer network (42).

7. Terminal according to any one of the preceding claims, wherein the server (24, 36) is arranged for interpreting URL locators for controlling external devices.

## Patentansprüche

1. Multimedia-Endgerät für den digitalen Fernsehempfang, das dazu bestimmt ist, Eingangssignale von Bildern und von Daten zu empfangen, die Informationen über den Fernsehinhalt liefern, das enthält:
- Empfangseinrichtungen (12), die ausgehend vom Eingangsstrom ein Fernsehsignal im Basisband liefern;
- einen Speicher (22) zum Speichern von digitalen Informationen, die im Eingangsstrom enthalten sind;
- einen Bildschirmtreiber-Videowandler (16), der ein von einem Fernsehgerät (20) auswertbares Signal liefert;
- einen Bildschirmanzeige-Generator (OSD);
- eine Anzeigemaschine (30) von Seiten in einer Sprache, die Lokalisierer enthält;
- eine Steuermitteilungs-Empfangsvorrichtung zum Bezeichnen oder Anzeigen einer besonderen Zone des Bildschirms, die einem Lokalisierer entspricht;
- einen Browser (28), der diesen Bildschirmanzeige-Generator (OSD) mittels der Anzeigemaschine (30) betreibt, um die Anzeige mindestens einer Seite auf dem Bildschirm zu bewirken;
- einen ersten internen Server (24), der Informationen aus dem Speicher (22) entnehmen und sie umwandeln kann, um sie in Form von Seiten in einer Sprache zu bringen, die mit derjenigen der Anzeigemaschine (30) kompatibel ist, und sie an den Browser (28) zu liefern; und
- einen zweiten internen Server (36), der gemäß einem Fernsehprotokoll folgend, vom Lokalisierer bezeichnete Vorgänge ausführen kann;
- wobei die Steuermitteilungs-Empfangsvorrichtung das Senden derjenigen der Lokalisierer, die diesem Fernsehprotokoll entsprechen, an deen zweiten internen Server (36) bewirkt.

2. Endgerät nach Anspruch 1, **dadurch gekennzeichnet, dass** die zugänglichen Vorgänge die Kontrolle der Fernsehempfangsfunktionen enthalten.

3. Endgerät nach Anspruch 2, **dadurch gekennzeichnet, dass** die Funktionen die Wahl des Kanals, die Anzeige der Untertitel, die Tonunterdrückung enthalten.

4. Endgerät nach Anspruch 1, 2 oder 3, **dadurch gekennzeichnet, dass** der erste Server (24) mit Einrichtungen für den Zugriff auf eine externe Kabelverbindung verbunden ist, um Mitteilungen von außerhalb zu empfangen.

5. Endgerät nach Anspruch 4, **dadurch gekennzeichnet, dass** der Zugriff von außerhalb mit einem Code erfolgt.

6. Endgerät nach einem der vorhergehenden Ansprüche, **dadurch gekennzeichnet, dass** der Browser (28) mit Einrichtungen (40, 44) für den Zugriff auf ein globales Netz von Computern (42) versehen ist.

7. Endgerät nach einem der vorhergehenden Ansprüche, **dadurch gekennzeichnet, dass** der Server (24, 36) vorgesehen ist, um URL-Lokalisierer zur Steuerung externer Vorrichtungen zu interpretieren.
